# EUROPEAN PATENT SPECIFICATION

(11) **EP 4 401 550 B1**
(45) Date of publication and mention of the grant of the patent: **26.11.2025**
(21) Application number: 22773334.2
(22) Date of filing: 16.09.2022
(51) Int. Cl.: A01K 43/08, B65G 11/00, B65G 11/08

(54) **EGG PROCESSING SYSTEM AND METHOD FOR PROCESSING EGGS**
EIERVERARBEITUNGSSYSTEM UND VERFAHREN
SYSTEME ET PROCEDE POUR LE TRAITEMENT DES OEUFS

(30) Priority: 16.09.2021 NL 2029187
(43) Date of publication of application: 24.07.2024
(73) Proprietor: Moba Group B.V., 3771 VE Barneveld (NL)
(72) Inventor: FLOOR, Martijn, 3771 VE Barneveld (NL); VAN DEN BRINK, Hendrik, 3771 VE Barneveld (NL); DEKKER, Bertus, 3771 VE Barneveld (NL); TOP, Aad Willem, 3771 VE Barneveld (NL)
(74) Representative: V.O.
(86) International application number: PCT/NL2022/050520
(87) International publication number: WO 2023/043311

(56) References cited:
- BR-A2- 102018 075 994
- CN-B- 104 396 798
- CN-U- 202 799 874
- KR-Y1- 200 357 183

## Description

The invention concerns an egg processing system.

Egg processing systems, including egg weighing devices, are known from the prior art. In a known system, the egg weighing device is installed in an egg transporting track, to weigh an egg carrying track section each time an egg passes that section. A disadvantage of known configurations is accumulation of contaminants (e.g. sticky egg liquid) near/at the weighing device transport section, which contaminants can be passed along by one or more of the eggs to be processed. As a result, desired accurate egg weighing measurements can be difficult to obtain. It is known to manually wash the entire egg transporting track after a certain operational period however, it has been found that this does not always remedy the egg weighing problem, whereas such washing operations can lead to undesired long system downtimes.

KR200357183 and CN202799874 concern egg sorter systems having an egg weighing bridge. CN104396798 discloses a rolling type egg weighing device which comprises an oblique guide rail, a horizontal guide rail, a weighing bracket, at least one weighing sensor, and a plurality of weighing delivery rods.

The present invention aims to solve the above-mentioned problems. In particular, the invention aims to provide an improved, reliable egg processing system, wherein relatively large numbers of eggs can be measured (in particularly weighed) accurately and wherein long system up-times can be obtained.

According to the invention, this is achieved by the features of claim 1.

Advantageously, there is provided an egg processing system including a transport structure configured for supporting eggs along a transport direction T, wherein the transport structure includes at least two neighboring sections separated by at least one slit, one of the at least two sections being part of an egg weighing device, wherein the system includes cleaning means for cleaning said slit.

It has been found that in this way, dirt or other contamination (e.g. being conveyed by passing eggs) that is accumulated in said slit, can be efficiently removed by said dedicated cleaning means. As a result, reliable operation of the egg weighing device can be achieved so that accurate measurement results (of egg weights) can be obtained. Besides, long system downtimes can be avoided or reduced. It is preferred that the (dedicated) cleaning means are configured for cleaning said slit only, without cleaning other system components (e.g. without upper surfaces of cleaning nearby transport structure sections).

In particular, a basic idea of the invention is that an egg supporting transport section of an egg weighing device can be mechanically separated from a neighboring (e.g. upstream) egg transport section by a relatively small slit, allowing weighing operation independent of that neighboring transport section. By providing a dedicated slit cleaning means, which can be operated or active during a dedicated, relatively short, slit cleaning step (preferably when no egg passes the slit), accumulation of dirt in the slit can be prevented or at least significantly reduced. As a result, a good mechanical separation between the weighing transport section and the neighboring egg transporting section can be upheld so that accurate weight measurements can be carried out, during relatively long overall system up-times.

Good results can be achieved in case at least one of the at least two sections is movably arranged with respect to the neighboring section, such that the respective section can be moved to act as the cleaning means during a cleaning mode of the system, wherein the system is configured to block movement of the movable cleaning section during a normal egg processing mode of the system. Alternatively or additionally, the cleaning means include a cleaning device configured to be moved into and out of said slit during a cleaning mode of the system. In particular, in this way, cleaning can be achieved mechanically, which can lead to reliable and swift declogging of the slit

Also, the invention provides a method according to the features of claim 10.

The method can for example utilize a system according to the invention, and is characterized by:
- guiding a number of eggs on a transport structure, configured for supporting eggs, in a transport direction, along at least two neighboring sections separated by at least one slit, one of the at least two sections being part of an egg weighing device, the egg weighing device performing an egg weighing operation when the respective section of the transport structure carries an egg;
- a slit cleaning step, including activating cleaning means, to clean said slit, for example after a number of eggs has passed the slit.

In this way, above-mentioned advantages can be achieved.

In the following, the invention will be explained with reference to the drawings, which show non-limiting examples.
Figure 1 schematically shows a perspective view of a first embodiment of an egg processing system;
Figure 2 shows a side view of the example of Fig. 1;
Figure 3A shows a top view of the example of Fig 1, wherein the cleaning means are in a first position;
Figure 3B is similar to Fig. 3A, showing a second position of the cleaning means;
Figure 4 shows a detail Q of Fig. 2;
Figure 5A is similar to Fig. 2, showing a second embodiment of an egg processing system;
Figure 5B depicts a top view of the second embodiment wherein the cleaning means are in a first position;
Figure 5C depicts a top view of the second embodiment wherein the cleaning means are in a second position;
Figure 6A is similar to Fig. 2, showing a third embodiment of an egg processing system;
Figure 6B shows the third embodiment after rotation of the cleaning means;
Figure 7A is similar to Fig. 2, showing a fourth embodiment of an egg processing system, in an egg processing state;
Figure 7B shows the fourth embodiment during a slit cleaning step;
Figure 8A shows a bottom view of a fifth embodiment of an egg processing system; and
Figure 8B shows the fifth embodiment during activation of the slit cleaning means.

Similar or corresponding features are denoted by similar or corresponding reference signs in this application.

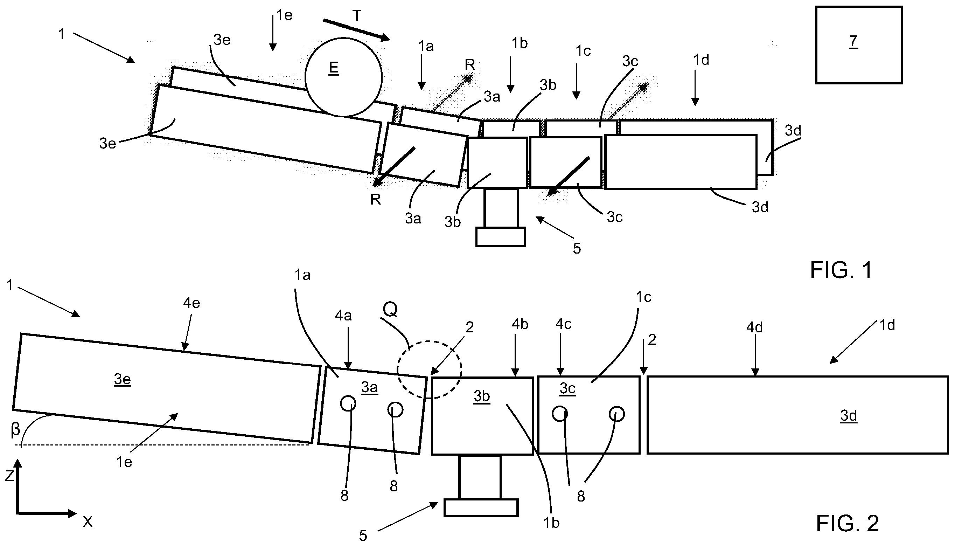

Figures 1-4 show an example of an egg processing system. The system includes a transport structure 1 configured for supporting (and guiding) eggs E along a transport direction T (which can be substantially or mainly parallel to a horizontal direction X).

The egg transport structure 1 as such can be configured in various ways. According to an example, the transport structure can include at least two neighboring sections, for example a first section 1a and a downstream second section 1b, separated by a respective slit 2 (i.e. a gap, particularly an air gap). The second one of the at least two sections 1b can be part of (or provide) an egg weighing device 5. For example, the egg weighing device 5 can support the respective section 1b, or be integrated there-with.

For example, the system can include transport means similar to an egg weighing device used in the Forta GT100 system of Moba, as shown in www.youtube.com/watch?v=vdof3XgpCzM.

According to an embodiment, the transport structure can include at least three neighboring sections, for example a first section 1a and a second (intermediate) section 1b and a downstream third section 1c, separated by respective slits 2, wherein the middle (second) section 1b can be part of (or provide) the egg weighing device 5. Optionally, there can be provided one or more further downstream fourth sections 1d of the transport structure 1d. Also, optionally, there can be provided one or more further upstream fifth sections of the transport structure 1e.

Each of the neighboring sections 1a, 1b, 1c, 1d, 1e of the transport structure can be configured in various ways. In particular, the neighboring sections 1a, 1b, 1c, 1d, 1e can be configured to carry and guide eggs E along a respective transport direction T. According to an embodiment, the transport can be effected by gravity (i.e. without a conveyor or drive mechanism), wherein the eggs E can roll (freely and/or guided) from an initial vertical level over support surfaces/edges 4a, 4b, 4c, 4d, 4e of the neighboring sections 1a, 1b, 1c, 1d, 1e to a second vertical level that is lower than the initial vertical level (see Fig. 1), such that the rolling eggs E pass the weighing device 5. Each of the neighboring sections 1a, 1b, 1c, 1d, 1e of the transport structure can e.g. be configured or shaped as an egg guide, providing upper guiding surfaces/edges for directly supporting and guiding the eggs E along the transport direction T, towards and along (and preferably away from) the weighing device 5. Thus, during use, the eggs E can be transferred from one of the sections to the -neighboring- other (viewed along the transport direction).

For example, at least one section 1b, 1e of the transport structure can be a downwardly sloped section, e.g. providing a respective sloped egg guiding path that include an angle β larger than zero with a horizontal plane (XY), for example an angle β in the range of 0-30 degrees. The transport section 1b that is part of the egg weighing device 5 can e.g. define a respective local horizontal egg transport path (see Fig. 1, 2), but that is not required as it may be a sloped path as well.

Similarly, one or more sections 1c, 1d (if any) of the transport structure located downstream of the second section 1b can provide respective horizontal egg supporting surfaces, but that is not required.

Optionally, the transport structure includes additional egg guiding members (not shown) travelling along the transport direction T, to define a certain egg travelling speed along a or each downwardly sloped track section 1e, 1b (to avoid that a travelling speed of downwardly rolling eggs keeps increasing due to gravity). As will be appreciated by the skilled person, such an additional egg guiding member can extend into the path of the downwardly rolling egg E , such the guiding member guides the downwardly rolling egg E along the support section 1e, 1b at a certain (e.g. constant or predefined) speed. It is preferred that an array of additional spaced-apart egg guiding members is provided, for guiding a plurality of eggs E, spaced-apart from each other, over the sloped support section 1e, 1b.

For example, each of the transport sections 1a, 1b, 1c, 1d, 1e can include two parallel, spaced-apart, egg supporting guides 3a, 3b, 3c, 3d, 3e, defining an egg guiding track along said transport direction T, wherein a said slit 2 is defined between the opposite ends (in particular opposite butt ends) of opposite guides 3a, 3b, 3c, 3d, 3e of respective neighboring sections 1a, 1b, 1c. Each of the parallel supporting guides can e.g. be an elongated plate or strip or rod or guide rail, e.g. made of steel or a different material. The two parallel egg supporting guides of a transport section e.g. can define spaced-apart parallel upper (i.e. upwardly facing) egg guiding edges 4a, 4b, 4c, 4d, 4e, arranged for directly supporting and guiding eggs E (the eggs E preferably rolling over those guiding edges 4a, 4b, 4c, 4d, 4e during operation) in the transport direction T, along the track. Egg movement along the track, defined by the transport structure 1, can include a rolling movement of the egg E over the track, and/or a sliding movement of the egg E. During such movement the egg E can directly contact a generally stationary guiding surface, e.g. provided by said parallel upper egg guiding edges 4a, 4b, 4c, 4d, 4e, of the transport structure 1 (i.e. the relevant part of transport structure 1 as such does not move along the transport direction T for moving the egg in that direction T). In case of implementation of said additional guiding members, traveling at a certain speed along a downwardly sloped track section, the eggs (in particular their downstream sides) can also be contacted by such guiding members during movement along the respective track section(s).

One or more of the sections 1, 1a, 1b, 1c, 1d, 1e can also be configured differently, e.g. by including elongated egg guiding channels or throughs, configured for directly supporting and guiding rolling and/or sliding eggs E along the transport direction.

In particular, a slit 2 between two neighboring sections 1a, 1b, 1c can mechanically decouple the sections 1a, 1b, 1c so that the weighing device 5 can weigh the second section 1b, and well as any egg E carried on or transported over the second section 1b. For example, a width W of the slit 2 (measured along the transport direction T) can be smaller than a width or diameter of eggs E to be transported, the slit width W for example being at least 1 mm, for example being in the range of 1-30 mm, and preferably a range of 1-8 mm.

As will be appreciated by the skilled person, the weighing device 5 as such can be configured in various ways, e.g. including a pressure sensor or load cell or scale, connected to or integrated in the respective egg weighing transport section 1b. According to an example, a weight of an egg E carried on/by the second section 1b of the transport structure 1 may lead to a (small) vertical downward displacement of that second section 1b, the displacement being sensed, and e.g. countered (e.g. via spring force), by the weighing device 5. Such a weighing related vertical displacement is generally significantly smaller than said slit width W, e.g. a vertical weighing displacement smaller than 1 mm. After such weighing, the second section 1b of the transport structure can return in upward direction Z to an initial position (the returning action e.g. being effected by the weighing device 5), i.e. after the measured egg E has rolled away from that the second section, e.g. onto a subsequent third section 1c (if any) of the transport structure 1. The weighing device 5 can be configured to generate a weighing result or signal, e.g. an electric or electronic or optical signal, providing a respective measurement result (the result being indicative of a weight or mass of an egg E that passes or has passed the respective transport section 1b, as will be clear to the skilled person), which signal can be processed e.g. by or controller or processing means (not depicted) such as egg sorting or classifying means or the-like.

According to a preferred embodiment, the transport structure 1 is configured such that a number of eggs E can be guided along the weighing device 5 one after the other, such that the weighing device 5 can provide individual detection results concerning each of the eggs E.

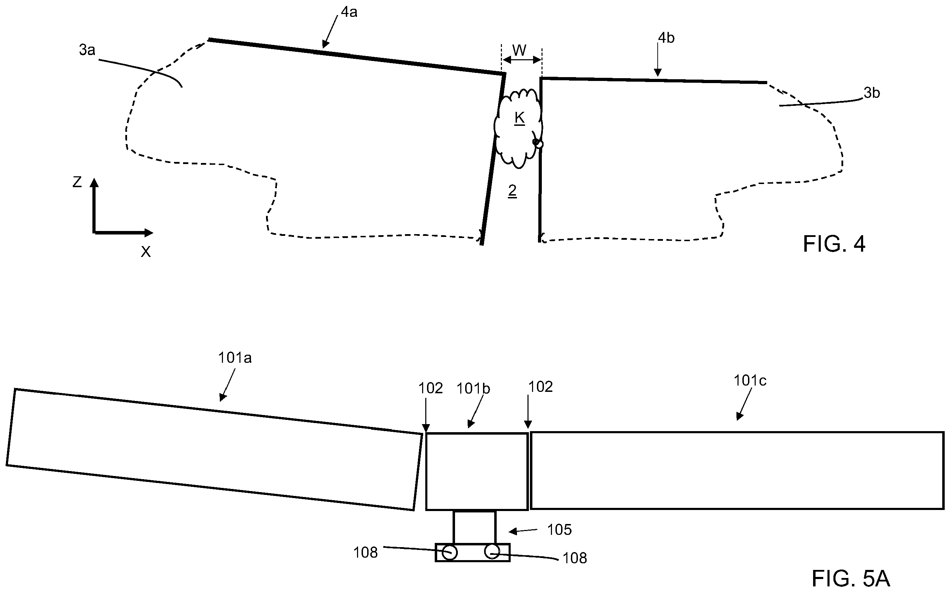

As is depicted in Figure 4, a said slit 2 extending between a second transport section 1b and an or each neighboring transport section 1a, 1c can be contaminated, e.g. at least partly filled/clogged, by contamination K. Such contamination may hamper proper operation of the weighing device 5 since it can mechanically link between the two (or three) transport sections 1a, 1b (1a, 1b, 1c).

Advantageously, the system includes cleaning means 1a, 1c for cleaning an aforementioned slit 2 (and preferably only the slit 2, without cleaning e.g. egg supporting surfaces of said transport sections 1a, 1b, 1c). It is preferred that the cleaning means 1a can be activated (e.g. by a dedicated cleaning means controller 7), for removing clogging material K from the slit 2, or at least breaking such material K (the cleaning means can also be called declogging means). In this way, the problems concerning slit contamination/clogging can be resolved or at least significantly alleviated, allowing proper operation of the weighing device 5. The cleaning means can be configured in various ways.

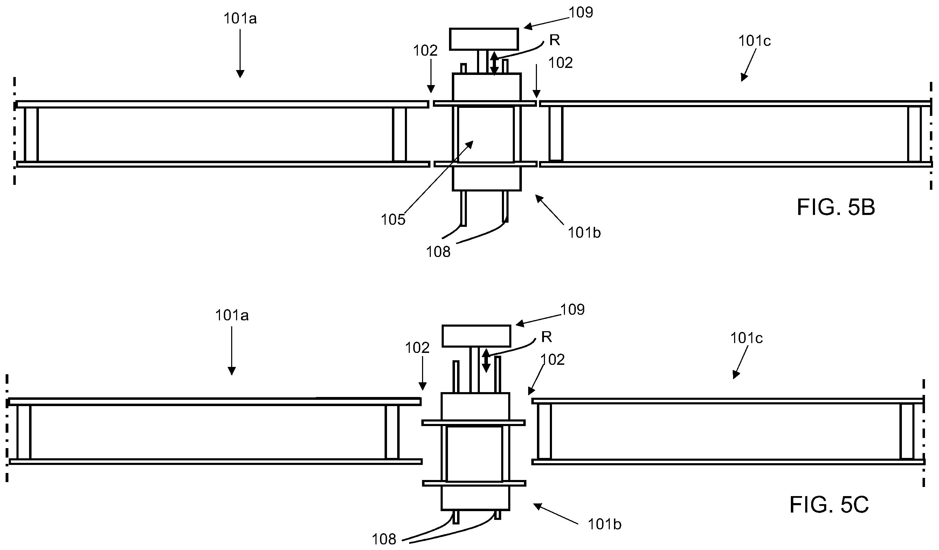

At least one 1a, 1c of the at least two neighboring egg transport sections 1a, 1b, 1c can for example be movably arranged with respect to the neighboring section 1b, such that the respective movable section 1a, 1c can be displaced to act as the cleaning means (in particular during a cleaning mode of the system). Preferably, the system is configured to block movement of a movable cleaning section 1a, 1c during a normal egg processing mode of the system (i.e. to retain that section 1a, 1c in a respective egg guiding position with respect to a neighboring second transport section 1b). For example, both an upstream section 1a and a downstream section 1c of transport structure can act as a slit cleaning section, movably arranged with respect to an intermediate weighing section 1b, for declogging corresponding slits 2. Alternatively or additionally, the intermediate weighing section 1b can be movable arranged with respect to a neighboring transport section 1a, 1c (see Figures 5A, 5B, 5C) to provide slit cleaning.

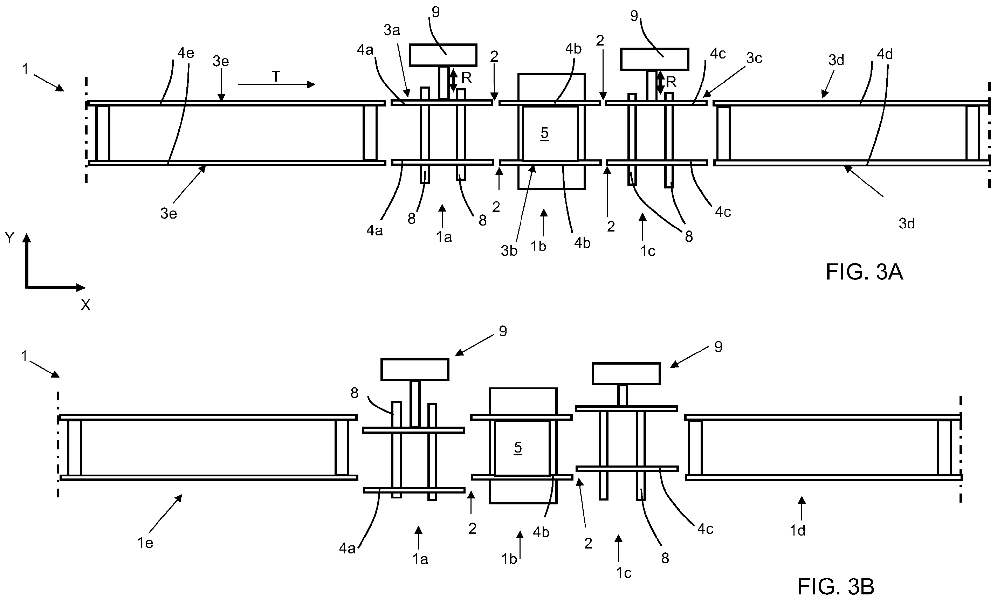

It is preferred that a movable slit cleaning section 1a, 1c is movable over a relatively large distance with respect to the neighboring transport section 1b, e.g. between an initial position (see Figure 3A) defining the slit 2 with the neighboring section 1b, and a second position (see Figure 3B) wherein that slit 2 is significantly widened with respect to its initial operational width W (for example by a factor of at least two, and preferably a factor of at least five) or wherein that slit is not present anymore. Movement of the moveable transport section(s) is indicated by arrows R in the drawings. According to an embodiment, the or each movable cleaning section 1a, 1c can be movable over a distance of more than 1 mm, for example at least 1 cm during a cleaning mode of the system. For example, egg guides 3a, 3c of a movable cleaning section 1a, 1c can substantially align with corresponding egg guides 3b of the neighboring transport section 1b (providing a substantially continuous egg transport path) when the cleaning section is in its initial position, wherein egg guides 3a, 3c of that movable cleaning section 1a, 1c misalign with corresponding egg guides 3b of the neighboring transport section 1b when that movable section 1a, 1c has been moved to its second (slit declogging) position.

Movement of the or each movable slit cleaning section 1a, 1c can be a substantially horizontal movement/translation, for example a horizontal movement in a direction Y that is transversal to a general egg transport direction T (and respective first horizontal direction X), see Figures 1-4. For example, a movable cleaning section 1a, 1c can be movably held or guided by respective guide elements 8 (schematically depicted). According to an embodiment, the movement can involve iterative and/or vibrating movement of the movable slit cleaning section 1a, 1c, between first and second positions, for improving slit cleaning results. Alternatively, a single movement action of the cleaning section 1a, 1c, from the first position to the second position and back, can be sufficient to provide good slit declogging.

According to an embodiment, the system can include one or more actuators 9 configured to move the cleaning section(s) 1a, 1c of the transport structure from a first (initial) position to a second position, and e.g. vice-versa, with respect to the neighboring section 1b of the transport structure. The or each actuator 9 can e.g. include electric, hydraulic and/or pneumatic actuation means, a motor, piston/cylinder-type actuator, electromagnetic actuator, servo, or the-like, for example depending on the type of movement (translation and/or rotation), as will be appreciated by the skilled person.

According to an embodiment, the system can include a cleaning mode controller 7 (schematically depicted in Figure 1), configured to provide a slit cleaning mode of the system during which the cleaning means 1a, 1c are activated for cleaning said slit(s) 2.

For example, the cleaning mode controller 7 can be configured to control the egg processing system to halt feeding eggs E to the transport structure 1, after which an or each actuator 9 can be controlled (by the controller 7) to move the respective cleaning section 1a, 1c between respective first and second positions, for declogging a respective neighboring slit 2.

Similarly, the cleaning mode controller 7 can be configured to control the system to end the cleaning mode after a certain cleaning period, by controlling the actuator(s) to move the cleaning section(s) 1a, 1c to their initial position(s), after which feeding eggs E to the transport structure 1 can be resumed by the system.

Alternatively, it can be preferred that the cleaning mode controller 7 can e.g. be configured to synchronize the cleaning mode with egg transport time intervals (or with egg locations on the track), in particular with time intervals of eggs passing the respective slit 2, such that a slit cleaning mode is active only when no egg E passes the slit 2, and such that no slit cleaning is applied when an egg E passes the slit 2. In this way, slit cleaning can be achieved without having to halt feeding eggs E to the transport structure 1.

Alternatively, it can be preferred that the cleaning mode controller 7 can e.g. be configured to automatically start the cleaning mode when the controller determines an idle state of the system, and/or when the controller determines that no eggs are being fed to the slit 2 during a certain time period (e.g. between batches of eggs to be processed). In that case, the cleaning mode controller 7 can e.g. be configured to stop the cleaning mode when the controller determines that the system is not idle anymore, and/or when the controller determines that eggs are being fed towards the slit 2 again.

The cleaning mode controller 7 can be or include an electronic unit, a microcontroller, computer, hardware and/or software, or the-like; the controller 7 can be configured to communicate with an actuator 9 for controlling actuator operation (and a corresponding cleaning section state) in various ways, e.g. via wired or wireless control signal paths (not shown), as will be clear to the skilled person.

Optionally, the cleaning mode controller 7 can be configured to periodically start a slit cleaning mode. Also, optionally, the cleaning mode controller 7 can be configured to start a slit cleaning mode after a predetermined number of eggs E has passed the weighing section 1b of the transport structure (to that aim, the controller 7 can e.g. be configured to communicate with the weighing device 5 for counting passage of eggs E, or e.g. with a dedicated egg passage counter -not depicted- arranged along the track).

For example, also, the cleaning mode controller 7 can be configured to start a slit cleaning mode immediately after a single egg E (of a plurality of eggs transported by the system in the transport direction T) has passed the slit 2 or respective weighing section 1b.Similarly, the cleaning mode controller 7 can be configured to timely stop the cleaning mode, in particular before a next egg E (of said plurality of eggs transported in the transport direction T) arrives at that slit 2, to prevent that the cleaning mode is still active when that next egg E passes the slit 2.

In particular, during operation, a plurality of eggs E can pass the slit 2, one after the other, spaced-apart, so that the eggs E can be weighted individually, such that no egg E will be present above the slit 2 at certain time intervals, during which time intervals a said cleaning mode can be active (i.e. activated by the controller 7).

According to an embodiment, a cleaning mode is carried out within a relatively small time period. For example, during the cleaning mode, the movable slit cleaning section 1a, 1c can be moved only a limited number of times between an initial position and a second (e.g. slit widening) position, for example only once.

Optionally, the system can include one or more slit clogging sensors (not shown) arranged to detect slit clogging K, for example an optical sensor. In that case, the cleaning mode controller 7 can be configured to initiate a cleaning mode based on a slit clogging sensor detection result (e.g. when the sensor detects a certain threshold amount of contamination K being present in the slit 2).

According to an embodiment of the invention, which can include use of one or more of the afore-mentioned embodiments, there is provided a method for processing eggs E. The method includes:
- guiding a number of eggs on a transport structure 1, configured for supporting eggs E, in a transport direction T, along at least two neighboring sections 1a, 1b, 1c separated by at least one slit 2, one of the at least two sections 1b being part of an egg weighing device 5, the egg weighing device 5 performing an egg weighing operation when the respective section 1b of the transport structure carries one egg E; and
- a slit cleaning step, including activating cleaning means 1a, 1c to clean said slit 2, for example after a number of eggs E has passed the slit 2.

As follows from the above, the egg guiding can e.g. involve the eggs rolling along a track that is provided by the neighboring sections of the transport structure.

For example, starting and ending the slit cleaning step can be initiated by an aforementioned cleaning mode controller 7. Also, transport of eggs E over the neighboring sections of the transport structure 1 is preferably halted during activation of the cleaning means 1a, 1c (so that the slit cleaning can be carried out safely, avoiding egg impact on a moving slit cleaning section of the transport structure).

The slit cleaning step preferably includes moving at least one 1a, 1c of the at least two sections 1a, 1b, 1c of the transport structure 1, with respect to the neighboring section 1b of the transport structure 1. As a result, slit clogging material K (if present) can be broken or removed, so that the slit 2 can remain open allowing proper operation of the egg weighing device 5 (associated with a said transport section 1b).

It is preferred that the slit cleaning step is carried out swiftly, for example within a minute or even within a number of seconds (for example within 10 seconds, within 5 seconds, or within 1 second) so that system downtime can be kept at a minimum. As an example, the cleaning step can be carried out each time an egg E has passed the respective slit 2, or each time a specific, predefined, number of eggs E has passed the slit 2).

Figures 5A, 5B, 5C depict an embodiment that differs from the example of Figures 1-4 in that the weighing section 101b of the transport structure is movably arranged, between an initial egg guiding state (as shown in Figures 5A, 5B) for guiding and weighing passing eggs E, and a second (slit cleaning, i.e. dirt breaking) position as shown in Fig. 5C. The weighing section 101b can be located e.g. between two stationary egg guiding sections 101a, 101c of the transport structure, defining respective slits 102 therewith.

For example, the movable weighing section 101b can be movably held or guided by respective guide elements 108 (schematically depicted), and be connected to or provided with an actuator 109 to move the weighing section 101b during slit cleaning operation. As mentioned before, according to a preferred embodiment, the movement can involve iterative and/or vibrating movement of the movable transport (and weighing) section 101b, or a single movement action.

In Figures 5A, 5B, 5C, the movement of the weighing section 101b is directed transversally (substantially horizontally, as indicated by arrow R) with respect to the transport direction T.

In an alternative embodiment, a movable weighing section 101b can be movable, preferably by a respective actuator, in a substantially vertical direction for declogging an adjacent slit or slits 102. In that case the declogging movement is preferably such that the slit 102 is significantly widened with respect to its initial (operating) width W, for example by a factor of at least two, and preferably a factor of at least five, or such that the slit 102 is effectively not present anymore. In other words, the transport structure section 101b that is part of or associated with the egg weighing device 5 can be vertically movable over a relatively short (maximum) egg weighing distance during a normal egg processing mode of the system, e.g. less than 1 mm, wherein that section 101b is moved over a vertical distance that is (significantly) larger than the (maximum) egg weighing distance during a slit declogging step.

Operation of the example shown in Figures 5A, 5B, 5C can be substantially the same as operation of the first embodiment, a difference involving maintaining the nearby upstream and downstream transport sections 101a, 101c stationary during a slit cleaning (i.e. declogging) mode, and moving the weighing section 101b from an initial position to a second position (and back) in order to declogg or clean intermediate slits 102.

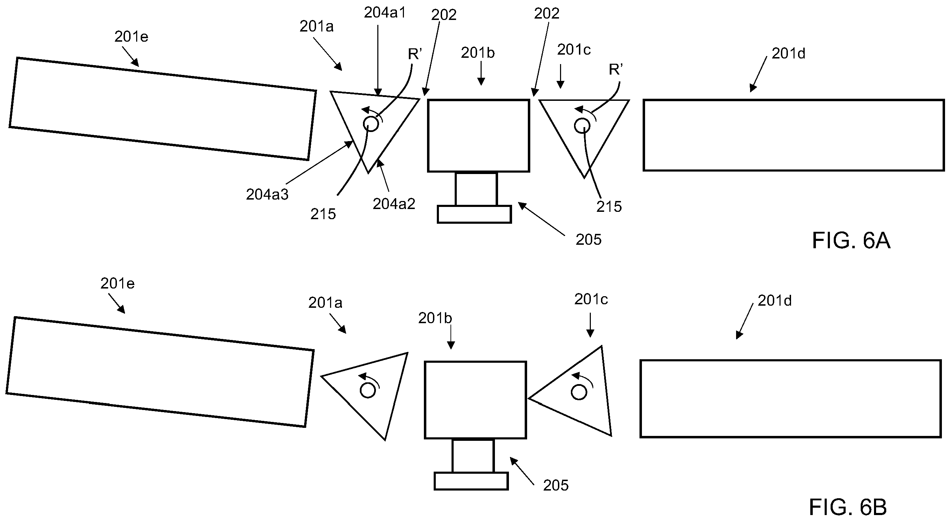

Alternatively or additionally, slit cleaning movement of a movable slit cleaning section 201a, 201c can be a rotational movement, for example a rotational movement about a rotation axis 215 extending transversally to the transport direction T (see Figures 6A, 6B). According to an embodiment, there can be provided a transport structure weighing section 201b associated with a weighing device 205, and one or two rotational transport section(s) 201a, 201c, and optional further upstream and/or downstream transport sections 201d, 201e (analogue above-described embodiments). During egg processing, each rotational transport section 201a, 201c can be held in an initial position for transferring eggs via respective (upper) egg guiding edges to (and from) the weighing section 201b, along intermediate slits 202. During a cleaning mode of the system, the or each rotational transport section 201a, 201c can be rotated (for example in a single direction of rotation, as indicated by arrows R') for increasing slit widths, or temporarily removing slit presence, allowing declogging.

In an example, a rotational cleaning section 201a, 201c can have an angular (e.g. square or triangular or multi-angular) shape, when viewed in a side view, such that an outer contour of the a rotational transport section 201a, 201c can provide a plurality of egg supporting edges 204a1, 204a2, 204a3 that can be aligned one after the other with egg supporting edges of the weighing section 201b, for transferring eggs thereto (and therefrom). For example, in case of a triangular shape, a rotation over 120 degrees (during a cleaning mode of the system) can provide slit declogging, whereas the rotation also involves replacing first egg guiding edges 204a1 of the cleaning section (initially being aligned with egg supporting edges of the weighing section) by second egg guiding edges 204a2 of the cleaning section (taking over the egg transfer function from the first egg guiding edges).

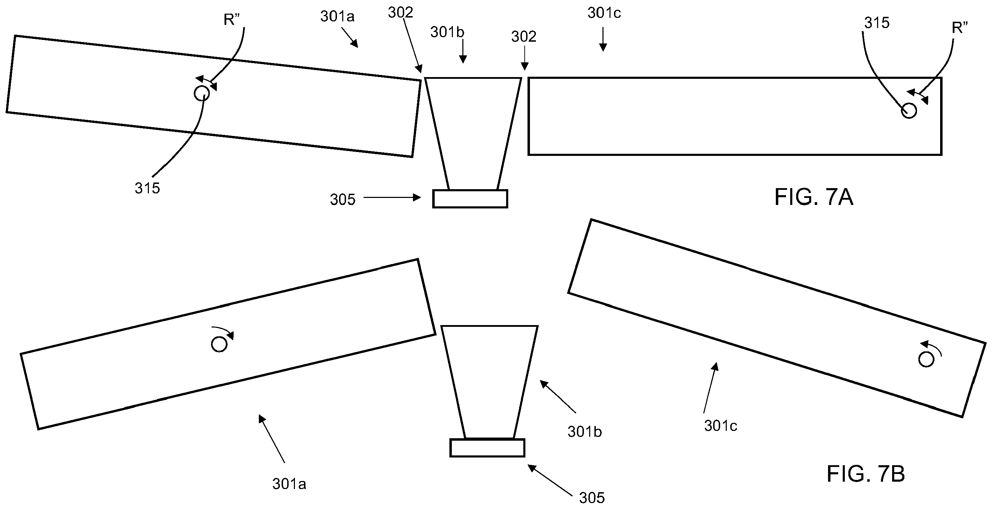

Figures 7A, 7B show an example which differs from the embodiment of Figure 6 in that each a cleaning section 301a, 301c is an elongated section that is pivotal or swivable back and forth, in opposite directions or rotation R", with respect to (horizontal) pivot axes 315. Figure 7A shows an initial, egg processing, state wherein egg supporting edges of the swivable cleaning section 301a, 301c are substantially aligned with egg supporting edges of an intermediate egg weighing section 301b (having a respective weighing device 305) of the system. Figure 7B shows the system during a slit cleaning mode, wherein the cleaning sections 301a, 301c have been pivoted away from the intermediate section 301b, to respective second positions, for declogging the adjoining slits 302. In this case, pivoting of a cleaning section 301a, 301c over a relatively small angle (e.g. an angle smaller than 45 degrees) can be sufficient to provide good slit cleansing.

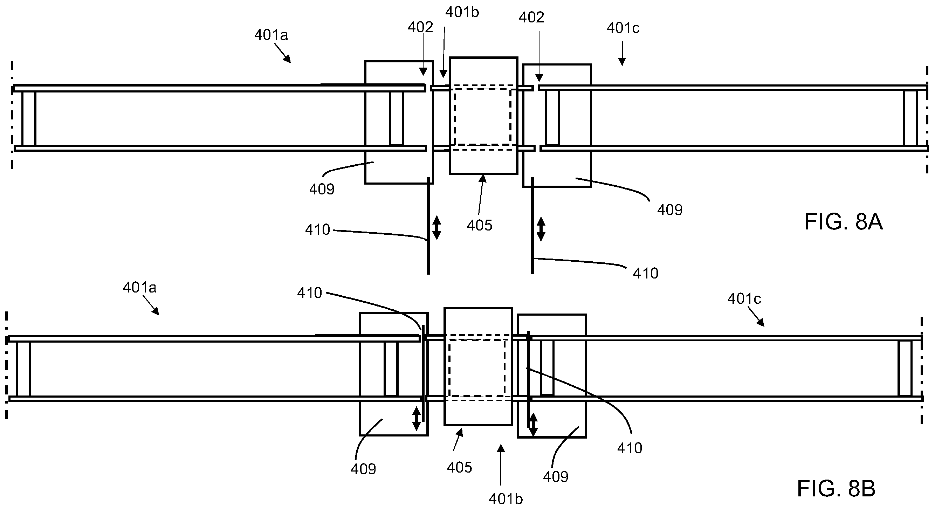

Alternatively or additionally, according to an embodiment, good results can be achieved in case the cleaning means include one or more dedicated cleaning devices 410 (see e.g. Figures 8A, 8B) configured to be moved into and out of said slits 402 during a cleaning mode of the system. Such a cleaning device 410 can include a declogging element, for example a plate or spike-like element, arranged to enter the slits 402 between the butt ends of neighboring transport sections 401a, 401b (and 401b, 401c respectively) during a system cleaning mode. The cleaning device 410 can be associated with one or more actuators 409 (schematically depicted) for achieving the declogging movement of the device. Movement of the cleaning device 410 can involve horizontal translation, vertical translation, rotation, or a combination of such movements. For example, a cleaning device 410 can be held in a suspended position above an egg transport path, above and/or next to the transport structure, to be moved into the slit 402 by the respective actuator 409 during the slit declogging step. A limited number of cleaning movement of the declogging device 410, for example only one, can be sufficient to provide efficient declogging.

As an alternative, or in addition, for example, a dedicated cleaning device can include e.g. one or more spray means or nozzles, configured to clean the slit 2 using a fluid spray or fluid jet, in particular configured to direct such fluid to or into the slit 2 (preferably without directing the fluid to other system parts). The fluid can e.g. be water or air. In this way, the fluid can be used as a slit declogger.

The skilled person will appreciate that the invention is not limited by the described embodiments. It will be clear that the invention, as defined in the claims, can be achieved in various ways. Reference signs used in the present disclosore should not be construed as limiting the scope of the invention.

It will be clear that a slit declogging movement of a transport structure section or declogging device can include a combination of different types of movement, for example both translational and rotational or pivotal movements, in various directions. According to an embodiment (not shown), a rotational or pivotal transport structure section (providing a slit cleaning section) can be rotational with respect to a vertical axis of rotation, or an axis of rotation extending at an angle with respect to horizontal and vertical planes.

Further, the invention can be implemented for processing avian eggs, for example unfertilized (non-living) eggs, but that is not required.

Subsequent sections of the transport structure can be arranged substantially in parallel, or in mutually different directions. Also, one or more of the sections of the transport structure can define a respective straight (e.g. substantially horizontal) transport path, but that is not required.

Movement of a said transport section can involve various types of movement, for example iterative movements, vibrations, rotations, translations, a movement in a single direction or in various directions, and/or a combination of such and different movements.

Also, for example, at least one section 1b, 1e of the transport structure can be a downwardly sloped section, e.g. providing a respective sloped egg guiding path (towards the slit ) that include an angle β larger than zero with a horizontal plane (XY), for example an angle β in the range of 0-30 degrees. Alternatively, a section that provides an egg guiding path towards the slit can be un upwardly sloped section, or a horizontal section.

## Claims

1. Egg processing system including a transport structure (1) configured for supporting eggs (E) along a transport direction T, wherein the transport structure includes at least two neighboring sections (1a, 1b, 1c) separated by at least one slit (2), one (1b) of the at least two sections (1a, 1b, 1c) being part of an egg weighing device (5), wherein the system includes cleaning means (1a, 1c; 410) for cleaning said slit (2),
**characterized in that**:
at least one (1a) of the at least two sections (1a, 1b) is movably arranged with respect to the neighboring section (1b), such that the respective section (1a) can be moved to act as the cleaning means during a cleaning mode of the system, wherein the system is configured to block movement of the movable cleaning section (1a) during a normal egg processing mode of the system.

2. Egg processing system according to claim 1, wherein the movable cleaning section (1a) is movable over a distance of more than 1 mm during a cleaning mode of the system.

3. Egg processing system according to claim 2, wherein the movable cleaning section (1a) is movable over a distance of at least 1 cm during a cleaning mode of the system.

4. Egg processing system according to any of claims 1 - 3, wherein the section (1b) that is part of the egg weighing device (5) is vertically movable over an egg weighing distance during a normal egg processing mode of the system, wherein the movable cleaning section (1a, 1b, 1c) is movable over a distance that is larger than the egg weighing distance during the cleaning mode of the system.

5. Egg processing system according to any of claims 1-4, wherein the system includes an actuator configured to move the cleaning section (1a) of the transport structure from a first position to a second position with respect to the neighboring section (1b) of the transport structure.

6. Egg processing system according to any of the preceding claims, including a cleaning mode controller (7) configured to provide a slit cleaning mode of the system during which the cleaning means (1a; 410) are activated for cleaning the slit (2).

7. Egg processing system according to any of the preceding claims, wherein one of the two sections (1a) of the transport structure is a sloped section.

8. Egg processing system according to claim 7, wherein the section (1b) that is part of an egg weighing device (5) defines a respective local horizontal egg transport path section.

9. Egg processing system according to any of the preceding claims, wherein each of the neighboring sections (1a, 1b) of the transport structure includes two parallel egg supporting guides (3), defining an egg guiding track along said transport direction T, wherein a said slit (2) is defined between two opposite edges of opposite guides (3) of two of the neighboring sections (1a, 1b).

10. Method for processing eggs, **characterized by** utilizing a system according to any of the preceding claims, including:
- guiding a number of eggs on the transport structure (1) in the transport direction T, along at least two neighboring sections (1a, 1b), the egg weighing device (5) performing an egg weighing operation when the respective section (1b) of the transport structure carries an egg (E);
- a slit cleaning step, including activating the cleaning means (1a, 1c), to clean said slit (2), for example after a number of eggs (E) has passed the slit (2), wherein the slit cleaning step includes moving at least one (1a, 1c) of the at least two sections (1a, 1b, 1c) of the transport structure (1), with respect to the neighboring section (1b, 1c) of the transport structure (1).

11. Method according to claim 10, wherein transport of eggs (E) over the neighboring sections of the transport structure (1) is halted during activation of the cleaning means (1a, 1c).

12. Method according to any of claims 10-11, wherein at least one (1a, 1c) of the at least two sections (1a, 1b, 1c) of the transport structure (1) is iteratively moved with respect to the neighboring section (1b) of the transport structure (1) during the slit cleaning step.

13. Method according to any of claims 10-11, wherein at least one (1a, 1c) of the at least two sections (1a, 1b, 1c) of the transport structure (1) is moved only once, for example from the a first position to a second position and back, during the slit cleaning step.

14. Method according to any of claims 10-13, wherein the slit cleaning step is carried out within 5 seconds, after which egg guiding on the transport structure is resumed.

15. Method according to any of claims 10-14, wherein:
- the cleaning means are activated after an egg (E) of a sequence of eggs has passed the slit (2), wherein the cleaning means are deactivated before a subsequent egg (E) of the sequence of eggs passes the slit (2); and/or
- the slit cleaning step is carried out within a minute, after which egg guiding on the transport structure is resumed; and/or
- the cleaning step includes moving a cleaning device (410) into and out of said slit (2).

## Patentansprüche

1. Eierverarbeitungssystem, das eine Transportstruktur (1) beinhaltet, die zum Halten von Eiern (E) entlang einer Transportrichtung T konfiguriert ist, wobei die Transportstruktur mindestens zwei benachbarte Abschnitte (1a, 1b, 1c) beinhaltet, die durch mindestens einen Spalt (2) getrennt sind, wobei einer (1b) der mindestens zwei Abschnitte (1a, 1b, 1c) Teil einer Eierwiegevorrichtung (5) ist, wobei das System Reinigungsmittel (1a, 1c; 410) zum Reinigen des Spalts (2) beinhaltet,
**dadurch gekennzeichnet, dass**:
mindestens einer (1a) der mindestens zwei Abschnitte (1a, 1b) in Bezug auf den benachbarten Abschnitt (1b) beweglich angeordnet ist, sodass der jeweilige Abschnitt (1a) bewegt werden kann, um während eines Reinigungsmodus des Systems als das Reinigungsmittel zu wirken, wobei das System so konfiguriert ist, dass es die Bewegung des beweglichen Reinigungsabschnitts (1a) während eines normalen Eierverarbeitungsmodus des Systems blockiert.

2. Eierverarbeitungssystem nach Anspruch 1, wobei der bewegliche Reinigungsabschnitt (1a) während eines Reinigungsmodus des Systems über eine Strecke von mehr als 1 mm bewegbar ist.

3. Eierverarbeitungssystem nach Anspruch 2, wobei der bewegliche Reinigungsabschnitt (1a) während eines Reinigungsmodus des Systems über eine Strecke von mindestens 1 cm bewegbar ist.

4. Eierverarbeitungssystem nach einem der Ansprüche 1 bis 3, wobei der Abschnitt (1b), der Teil der Eierwiegevorrichtung (5) ist, während eines normalen Eierverarbeitungsmodus des Systems vertikal über eine Eierwiegestrecke bewegbar ist, wobei der bewegbare Reinigungsabschnitt (1a, 1b, 1c) während des Reinigungsmodus des Systems über eine Strecke bewegbar ist, die größer ist als die Eierwiegestrecke.

5. Eierverarbeitungssystem nach einem der Ansprüche 1 bis 4, wobei das System einen Aktuator beinhaltet, der so konfiguriert ist, dass er den Reinigungsabschnitt (1a) der Transportstruktur von einer ersten Position in eine zweite Position in Bezug auf den benachbarten Abschnitt (1b) der Transportstruktur bewegt.

6. Eierverarbeitungssystem nach einem der vorstehenden Ansprüche, das eine Reinigungsmodussteuerung (7) beinhaltet, die so konfiguriert ist, dass sie einen Spaltreinigungsmodus des Systems bereitstellt, während dessen die Reinigungsmittel (1a; 410) zur Reinigung des Spalts (2) aktiviert werden.

7. Eierverarbeitungssystem nach einem der vorstehenden Ansprüche, wobei einer der beiden Abschnitte (1a) der Transportstruktur ein schräger Abschnitt ist.

8. Eierverarbeitungssystem nach Anspruch 7, wobei der Abschnitt (1b), der Teil einer Eierwiegevorrichtung (5) ist, einen jeweiligen lokalen horizontalen Eiertransportwegabschnitt definiert.

9. Eierverarbeitungssystem nach einem der vorstehenden Ansprüche, wobei jeder der benachbarten Abschnitte (1a, 1b) der Transportstruktur zwei parallele Eierhalterungsführungen (3) beinhaltet, die eine Eierführungsspur entlang der Transportrichtung T definieren, wobei der Spalt (2) zwischen zwei gegenüberliegenden Kanten der gegenüberliegenden Führungen (3) von zwei der benachbarten Abschnitte (1a, 1b) definiert ist.

10. Verfahren zur Verarbeitung von Eiern, **gekennzeichnet durch** die Verwendung eines Systems nach einem der vorstehenden Ansprüche, das Folgendes beinhaltet:
- Führen einer Anzahl von Eiern auf der Transportstruktur (1) in der Transportrichtung T entlang mindestens zweier benachbarter Abschnitte (1a, 1b), wobei die Eierwiegevorrichtung (5) einen Eierwiegevorgang durchführt, wenn der jeweilige Abschnitt (1b) der Transportstruktur ein Ei (E) trägt;
- einen Spaltreinigungsschritt, der das Aktivieren der Reinigungsmittel (1a, 1c) beinhaltet, um den Spalt (2) zu reinigen, beispielsweise nachdem eine Anzahl von Eiern (E) den Spalt (2) passiert hat, wobei der Spaltreinigungsschritt das Bewegen mindestens eines (1a, 1c) der mindestens zwei Abschnitte (1a, 1b, 1c) der Transportstruktur (1) in Bezug auf den benachbarten Abschnitt (1b, 1c) der Transportstruktur (1) beinhaltet.

11. Verfahren nach Anspruch 10, wobei der Transport von Eiern (E) über die benachbarten Abschnitte der Transportstruktur (1) während der Aktivierung der Reinigungsmittel (1a, 1c) angehalten wird.

12. Verfahren nach einem der Ansprüche 10 bis 11, wobei mindestens einer (1a, 1c) der mindestens zwei Abschnitte (1a, 1b, 1c) der Transportstruktur (1) während des Spaltreinigungsschrittes iterativ in Bezug auf den benachbarten Abschnitt (1b) der Transportstruktur (1) bewegt wird.

13. Verfahren nach einem der Ansprüche 10 bis 11, wobei mindestens einer (1a, 1c) der mindestens zwei Abschnitte (1a, 1b, 1c) der Transportstruktur (1) nur einmal, beispielsweise von einer ersten Position zu einer zweiten Position und zurück, während des Spaltreinigungsschritts bewegt wird.

14. Verfahren nach einem der Ansprüche 10 bis 13, wobei der Spaltreinigungsschritt innerhalb von 5 Sekunden durchgeführt wird, woraufhin die Eierführung auf der Transportstruktur wieder aufgenommen wird.

15. Verfahren nach einem der Ansprüche 10 bis 14, wobei:
- die Reinigungsmittel aktiviert werden, nachdem ein Ei (E) einer Folge von Eiern den Spalt (2) passiert hat, wobei die Reinigungsmittel deaktiviert werden, bevor ein nachfolgendes Ei (E) der Folge von Eiern den Spalt (2) passiert; und/oder
- der Spaltreinigungsschritt innerhalb einer Minute durchgeführt wird, woraufhin die Eierführung auf der Transportstruktur wieder aufgenommen wird; und/oder
- der Reinigungsschritt das Bewegen einer Reinigungsvorrichtung (410) in den Spalt (2) hinein und aus ihm heraus beinhaltet.

## Revendications

1. Système de traitement des œufs comprenant une structure de transport (1) configurée pour supporter des œufs (E) le long d'une direction de transport T, la structure de transport comportant au moins deux sections voisines (1a, 1b, 1c) séparées par au moins une fente (2), l'une (1b) desdites au moins deux sections (1a, 1b, 1c) faisant partie d'un dispositif de pesage des œufs (5), dans lequel le système comporte un moyen de nettoyage (1a, 1c ; 410) pour nettoyer ladite fente (2),
**caractérisé en ce qu'**au moins l'une (1a) desdites au moins deux sections (1a, 1b) est disposée de façon mobile par rapport à la section voisine (1b), de sorte que la section respective (1a) peut être déplacée pour servir de moyen de nettoyage pendant un mode de nettoyage du système, dans lequel le système est configuré pour bloquer le mouvement de la section de nettoyage mobile (1a) pendant un mode normal de traitement des œufs du système.

2. Système de traitement des œufs selon la revendication 1, dans lequel la section de nettoyage mobile (1a) est mobile sur une distance de plus d'1 mm pendant un mode de nettoyage du système.

3. Système de traitement des œufs selon la revendication 2, dans lequel la section de nettoyage mobile (1a) est mobile sur une distance d'au moins 1 cm pendant un mode de nettoyage du système.

4. Système de traitement des œufs selon l'une quelconque des revendications 1 à 3, dans lequel la section (1b) qui fait partie du dispositif de pesage des œufs (5) est mobile verticalement sur une distance de pesage des œufs pendant un mode normal de traitement des œufs du système, dans lequel la section de nettoyage mobile (1a, 1b, 1c) est mobile sur une distance qui est plus grande que la distance de pesage des œufs pendant le mode de nettoyage du système.

5. Système de traitement des œufs selon l'une quelconque des revendications 1 à 4, dans lequel le système comprend un actionneur configuré pour déplacer la section de nettoyage (1a) de la structure de transport d'une première position à une deuxième position par rapport à la section voisine (1b) de la structure de transport.

6. Système de traitement des œufs selon l'une quelconque des revendications précédentes, comprenant un dispositif de commande de mode de nettoyage (7) configuré pour fournir un mode de nettoyage de fente du système pendant lequel le moyen de nettoyage (1a ; 410) est activé pour nettoyer la fente (2).

7. Système de traitement des œufs selon l'une quelconque des revendications précédentes, dans lequel l'une des deux sections (1a) de la structure de transport est une section inclinée.

8. Système de traitement des œufs selon la revendication 7, dans lequel la section (1b) qui fait partie d'un dispositif de pesage des œufs (5) définit une section horizontale locale respective de chemin de transport des œufs.

9. Système de traitement des œufs selon l'une quelconque des revendications précédentes, dans lequel chacune des sections voisines (1a, 1b) de la structure de transport comporte deux guides de support d'œuf parallèles (3), définissant une piste de guidage des œufs le long de ladite direction de transport T, dans lequel une dite fente (2) est définie entre deux bords opposés de guides opposés (3) de deux des sections voisines (1a, 1b).

10. Procédé de traitement des œufs, **caractérisé par** l'utilisation d'un système selon l'une quelconque des revendications précédentes, comprenant les étapes suivantes :
- guider un nombre d'œufs sur la structure de transport (1) dans la direction de transport T, le long d'au moins deux sections voisines (1a, 1b), le dispositif de pesage des œufs (5) réalisant une opération de pesage des œufs lorsque la section respective (1b) de la structure de transport porte un œuf (E) ;
- une étape de nettoyage de fente, comprenant l'activation du moyen de nettoyage (1a, 1c), pour nettoyer ladite fente (2), par exemple après qu'un nombre d'œufs (E) a passé la fente (2), dans lequel l'étape de nettoyage de fente comprend le fait de déplacer au moins l'une (1a, 1c) desdites au moins deux sections (1a, 1b, 1c) de la structure de transport (1), par rapport à la section voisine (1b, 1c) de la structure de transport (1).

11. Procédé selon la revendication 10, dans lequel le transport des œufs (E) sur les sections voisines de la structure de transport (1) est interrompu pendant l'activation du moyen de nettoyage (1a, 1c).

12. Procédé selon l'une quelconque des revendications 10 à 11, dans lequel au moins l'une (1a, 1c) desdites au moins deux sections (1a, 1b, 1c) de la structure de transport (1) est déplacée de façon itérative par rapport à la section voisine (1b) de la structure de transport (1) pendant l'étape de nettoyage de fente.

13. Procédé selon l'une quelconque des revendications 10 à 11, dans lequel au moins l'une (1a, 1c) desdites au moins deux sections (1a, 1b, 1c) de la structure de transport (1) n'est déplacée qu'une fois, par exemple d'une première position à une deuxième position et retour, pendant l'étape de nettoyage de fente.

14. Procédé selon l'une quelconque des revendications 10 à 13, dans lequel l'étape de nettoyage de fente est réalisée dans un intervalle de 5 secondes, après quoi le guidage des œufs sur la structure de transport reprend.

15. Procédé selon l'une quelconque des revendications 10 à 14, dans lequel :
- le moyen de nettoyage est activé après qu'un œuf (E) d'une séquence d'œufs a passé la fente (2), le moyen de nettoyage étant désactivé avant qu'un œuf suivant (E) de la séquence d'œufs ne passe la fente (2) ; et/ou
- l'étape de nettoyage de fente est réalisée dans un intervalle d'une minute, après quoi le guidage des œufs sur la structure de transport reprend ; et/ou
- l'étape de nettoyage comprend le fait de faire entrer et sortir un dispositif de nettoyage (410) dans ladite fente (2).
